# EUROPÄISCHE PATENTSCHRIFT

(11) **EP 2 798 317 B1**
(45) Veröffentlichungstag und Bekanntmachung des Hinweises auf die Patenterteilung: **01.07.2020**
(21) Anmeldenummer: 12805614.0
(22) Anmeldetag: 22.11.2012
(51) Int. Cl.: G01F 23/00, G01F 23/296, G08C 19/02

(54) **VORRICHTUNG ZUR BESTIMMUNG UND/ODER ÜBERWACHUNG EINES GRENZWERTES EINER PROZESSGRÖSSE**
DEVICE FOR DETERMINING AND/OR MONITORING A LIMIT VALUE OF A PROCESS VARIABLE
DISPOSITIF DE DÉTERMINATION ET/OU DE SURVEILLANCE D'UNE VALEUR LIMITE D'UNE GRANDEUR DE PROCÉDÉ

(30) Priorität: 27.12.2011 DE 102011089941
(43) Veröffentlichungstag der Anmeldung: 05.11.2014
(73) Patentinhaber: Endress+Hauser SE+Co. KG, 79689 Maulburg (DE)
(72) Erfinder: SCHLEITH, Christoph, 79669 Zell i.W. (DE); DÖTSCH, Michael, 79736 Rickenbach (DE)
(74) Vertreter: Andres, Angelika Maria
(86) Internationale Anmeldenummer: PCT/EP2012/073373
(87) Internationale Veröffentlichungsnummer: WO 2013/097989

(56) Entgegenhaltungen:
- EP-A1- 1 134 562
- EP-A1- 2 045 791
- EP-A2- 0 883 097
- WO-A1-02/45045
- WO-A1-96/41135
- DE-U1- 29 917 651
- GB-A- 2 081 452
- US-A1- 2003 139 146
- US-A1- 2008 127 719

## Beschreibung

Die vorliegende Erfindung betrifft eine Vorrichtung zur Bestimmung und/oder Überwachung mindestens eines Grenzwerts einer Prozessgröße eines Mediums in einem Behälter, mit mindestens einer Sensoreinheit zur Aufnahme eines von der Prozessgröße abhängigen Messwertes und mit mindestens einer Elektronikeinheit zur Erzeugung eines von der Prozessgröße abhängigen Messsignals. Bei der Prozessgröße handelt es sich vorzugsweise um den Grenzstand, die Dichte, oder die Viskosität eines Mediums. Ein solcher Sensor ist z.B. aus WO 96/41135 A1 bekannt.

Aus dem Stand der Technik sind vibronische Grenzstandschalter bekannt, welche den Grenzstand einer Flüssigkeit oder eines Schüttguts mit Hilfe einer mechanisch schwingfähigen Einheit überwachen. Die mechanisch schwingfähige Einheit, bei welcher es sich beispielsweise bei Schüttgütern um einen Stab und bei Flüssigkeiten um eine Gabel mit zwei Zinken handelt, wird zu resonanten Schwingungen angeregt. Die Schwingungsanregung erfolgt hierbei in der Regel mittels eines piezoelektrischen oder induktiven Wandlers. Ändert sich der Bedeckungsgrad der schwingfähigen Einheit mit dem Medium, dessen Grenzstand es zu überwachen gilt, beeinflusst dies die Schwingfrequenz der schwingfähigen Einheit. Durch Festlegen eines Grenzwertes und Vergleich der aktuellen Schwingfrequenz mit dem Grenzwert ist detektierbar, ob der Füllstand des Mediums den Grenzstand über- oder unterschreitet. Moderne vibronische Grenzstandschalter sind in der Lage, den Grenzstand auch bei stark ansatzbildenden oder schäumenden Medien zuverlässig zu bestimmen. Derartige Grenzstandschalter werden von der Anmelderin unter dem Namen Liquiphant in großer Vielfalt hergestellt und vertrieben.

Weiterhin bekannt sind auf dem kapazitiven oder konduktiven Prinzip beruhende Grenzstandschalter mit mindestens einer Elektrode. Ein weitere Elektrode oder der Behälter fungieren als Gegenelektrode. Der Grenzstand wird kapazitiv über die durch das als Dielektrikum wirkende Medium veränderte Kapazität des aus Elektrode und Gegenelektrode gebildeten Kondensators gemessen. Bei der konduktiven Messung schließt das leitfähige Medium die Elektrode und die Gegenelektrode kurz.

Die genannten Grenzstandschalter benötigen zur Messung elektrische Energie. Die Energieversorgung erfolgt in der Regel über eine 2-Leiter-Verbindung mit einer Spannungsquelle. Über eine dritte Leitung gibt der Grenzstandschalter das Schaltsignal an eine Registriervorrichtung oder Steuereinheit zur Steuerung nachgeordneter Feldgeräte, beispielsweise eine speicherprogrammierbare Steuereinheit (SPS), weiter.

Ohne Hilfsenergie und hierdurch mit nur zwei Leitern kommen so genannte mechanische Schwimmer aus. Diese bestehen aus einem Stab, welcher vertikal in die Messflüssigkeit eingebracht ist, und einem oder mehreren magnetischen Schwimmkörpern, welche in vertikaler Richtung frei beweglich, aber von dem Stab geführt sind. Erreicht der Schwimmer den zu überwachenden Füllstand schließt er einen elektrischen Kontakt und verbindet hierdurch einen Ausgang und einen Eingang einer Verarbeitungseinheit. Derartige mechanische Schwimmschalter sind ohne Hilfsenergie betreibbar, jedoch verschleißanfälliger als beispielsweise vibronische oder kapazitive Grenzstandschalter.

Die Aufgabe der Erfindung besteht darin, eine elektronische Vorrichtung zur Erfassung eines Grenzwerts einer Prozessgröße bereit zu stellen, welche nur zwei Anschlussleiter benötigt.

Die Aufgabe wird durch eine Vorrichtung gemäß Anspruch 1 gelöst.

Erfindungsgemäß wird ein Messgerät vorgeschlagen, welches die für den Betrieb benötigte Energie von einer Registriervorrichtung oder einem Prozessleitsystem bezieht und somit keinen separaten Anschluss für die Versorgung mit Hilfsenergie benötigt.

Gemäß einer ersten Ausgestaltung handelte es sich bei dem Messsignal um ein Schaltsignal, welches in Abhängigkeit der Prozessgröße einen von zwei möglichen Zuständen annimmt.

Erfindungsgemäß weist die Vorrichtung eine Spannungsregeleinrichtung auf, welche den Spannungsausgang mit dem digitalen Eingang verbindet.

Erfindungsgemäß regelt die Spannungsregeleinrichtung in Abhängigkeit des Messsignals die Klemmenspannung der Vorrichtung.

In einer Weiterbildung versorgt die Spannungsregeleinrichtung die Elektronikeinheit mit einer konstanten Leistung.

In einer Weiterbildung besitzt die Spannungsregeleinrichtung einen veränderbaren Innenwiderstand.

Gemäß einer Ausgestaltung handelt es sich bei der nachgeordneten Steuer- und/oder Registrier-Vorrichtung um eine speicherprogrammierbare Steuerung oder um einen digitalen Bildschirmschreiber.

In einer Ausgestaltung handelt es sich bei der Prozessgröße um einen Grenzstand einer Flüssigkeit oder eines Schüttguts in dem Behälter oder um einen Grenzwert für die Dichte oder die Viskosität des Mediums.

Eine Ausgestaltung sieht vor, dass die Sensoreinheit als mechanisch schwingfähige Einheit mit einer Antriebs-/Empfangseinheit, welche die schwingfähige Einheit zu Schwingungen anregt und die Schwingungen empfängt und in ein elektrisches Empfangssignal umwandelt, ausgestaltet ist, und dass die Elektronikeinheit dazu ausgestaltet ist, die Schwingungsanregung zur regeln und das Empfangssignal in Bezug auf die Prozessgröße auszuwerten.

Eine andere Ausgestaltung sieht vor, dass die Sensoreinheit als konduktive oder kapazitive Sonde mit mindestens einer Elektrode ausgestaltet ist und dass die Elektronikeinheit dazu ausgestaltet ist, die Elektrode mit einem elektrischen Sendesignal zu beaufschlagen, ein elektrisches Empfangssignal zu empfangen und das Empfangssignal in Bezug auf die Prozessgröße auszuwerten.

Die Erfindung wird anhand der nachfolgenden Figuren näher erläutert.
- Fig. 1: zeigt schematisch ein vibronisches Messgerät;
- Fig. 2: zeigt schematisch die Komponenten eines vibronischen Messgeräts und dessen Energieversorgung.

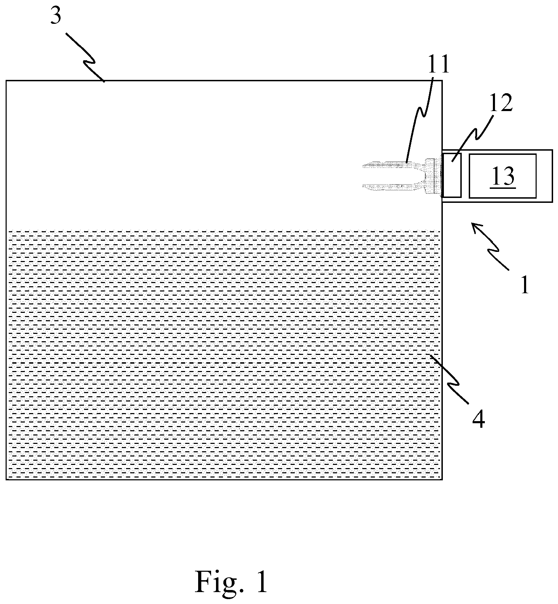

In Fig. 1 ist ein vibronisches Messgerät 1 zur Bestimmung und/oder Überwachung eines Grenzstands, der Dichte, oder der Viskosität eines Mediums in einem Behälter skizziert. Eine derartige Vorrichtung zur Überwachung eines vorgegebenen Grenzstands wird auch als vibronischer Grenzstandschalter bezeichnet. Das Messgerät 1 ist auf einer zu überwachenden Füllstandshöhe derart in dem Behälter 3 positioniert, dass die schwingfähige Einheit 11 in den Behälter 3 hineinragt, während das Gehäuse außerhalb des Behälters 3 verbleibt. Die schwingfähige Einheit 11 wird von zwei Schwingstäben gebildet, welche über eine Membran miteinander gekoppelt und über diese zu mechanischen Schwingungen anregbar sind. Auf der dem Medium 4 abgewandten Rückseite der Membran ist eine elektromechanische Wandlereinheit 12 angeordnet, welche die schwingfähige Einheit 11 zu resonanten mechanischen Schwingungen anregt und mechanische Schwingungen von dieser empfängt und in ein elektrisches Empfangssignal umwandelt. Die Antriebs-/Empfangseinheit 12 ist beispielsweise von einem oder mehreren piezoelektrischen oder induktiven Wandlerelementen gebildet.

An Stelle der beiden Schwingstäbe kann die schwingfähige Einheit 11 auch von einem Schwingstab oder einer Membran gebildet werden.

Die Anregung zu Schwingungen erfolgt in der Regel über einen analogen Schwingkreis, wobei eine Phasenverschiebung zwischen Anregungssignal und Empfangssignal fest vorgegeben wird, oder digital mittels eines so genannten Frequenzsweeps, bei welchem das Anregungssignal kontinuierlich ein vorgegebenes Frequenzband in diskreten Schritten durchläuft und hierbei auch die Resonanzfrequenz überstreicht.

Zur Bestimmung der Prozessgröße wertet die Elektronikeinheit 13 mindestens eine Schwingungseigenschaft an Hand des Empfangssignals aus. Hierzu weist die Elektronikeinheit 13 eine Logikeinheit auf, beispielsweise in Form eines Mikrocontrollers oder eines FPGAs (Field Programmable Gate Array). Zur Füllstandsmessung wertet die Logikeinheit die Schwingfrequenz bei Anregung zu resonanten Schwingungen aus, indem sie die gemessene Frequenz mit einer hinterlegten Grenzfrequenz vergleicht. Liegt die Schwingfrequenz unterhalb dieses Schwellwerts, ist die schwingfähige Einheit 11 mit Medium 4 bedeckt; liegt sie darüber, schwingt die schwingfähige Einheit 11 frei.

Analog zu dem Grenzstand sind auch für die Dichte oder die Viskosität Schwellwerte hinterlegbar, deren Über- oder Unterschreiten detektierbar und in Form eines Schaltsignals ausgebbar ist.

Grenzstandschalter finden häufig als Überfüllsicherung oder als Leerlaufschutz bei Pumpen Anwendung. Das Ausgangssignal des Grenzstandschalters, beispielsweise ein 4...20mA Signal, wird hierzu einer Prozesssteuerung zugeführt, welche in Abhängigkeit des Ausgangssignals nachgeordnete Aktoren, wie beispielsweise Ventile oder Pumpen steuert.

Neben vibronischen Grenzstandsschaltern sind auch auf dem konduktiven oder kapazitiven Prinzip beruhende Grenzstandschalter bekannt. Diese weisen eine Sondeneinheit mit mindesten einer Elektrode auf, welche mit einem elektrischen Anregungssignal beaufschlagt wird. Aus der Kapazität zwischen der Elektrode und einer Masseelektrode oder der Behälterwandung oder an Hand der Leitfähigkeit ist der Füllstand bestimmbar.

Die Erfindung wird hier am Beispiel der Schwinggabel als Grenzstandschalter erläutert, ist jedoch gleichermaßen bei anderen Vorrichtungen zur Erfassung von Grenzwerten von Prozessgrößen und Ausgabe von Schaltsignalen, insbesondere bei Grenzstandschaltern, einsetzbar. Mit anderen Worten kann es sich bei dem Messgerät um ein beliebiges Messgerät zur Ausgabe zweier Zustände handeln.

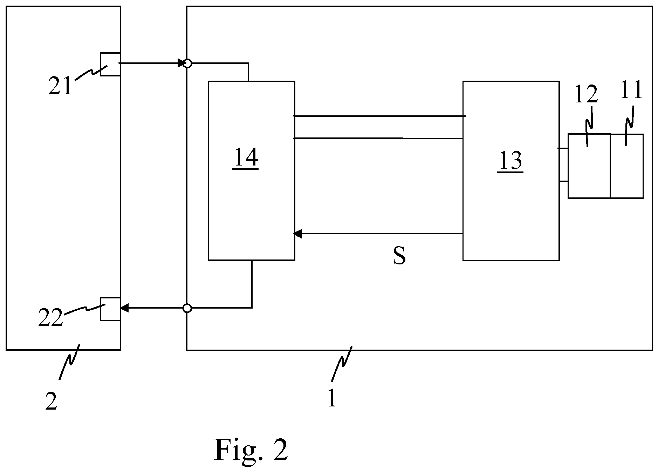

Fig. 2 offenbart ein Blockschaltbild eines erfindungsgemäßen vibronischen Grenzstandschalters. Dieser erzeugt ein Ausgangssignal in Form eines Schaltsignals, welches zwei Werte annehmen kann, wobei ein Wert "Bedeckt" und der andere Wert "Frei" bedeutet.

Im Gegensatz zu aus dem Stand der Technik bekannten Grenzstandschaltern benötigt der erfindungsgemäße Grenzstandschalter keine zwei Leiter zur Energieversorgung und einen dritten zur Übermittlung des Ausgangssignals an eine nachgeordnete Registrier-Vorrichtung zur Aufzeichnung und/oder graphischen Darstellung der Messwerte des Grenzstandschalters oder ein Prozessleitsystem. Vielmehr reichen zwei Leiter aus. Hierzu ist das Messgerät 1 mit zwei Leitern an einen Spannungsausgang 21 und einen digitalen Eingang 22 des Prozessleitsystems 2, beispielsweise einer SPS, angeschlossen. Der Spannungsausgang 21 stellt eine konstante Spannung bereit, beispielsweise 24 V. Die für den Betrieb des Messgeräts 1 benötigte Leistung liegt in der Regel in der Größenordnung von 1-10 mW und ist somit dem Prozessleitsystem 2 problemlos entnehmbar.

Die Spannungsregeleinrichtung 14 des Messgeräts 1 ist zwischen die beiden Klemmen geschaltet und verbindet den Spannungsausgang 21 mit dem digitalen Eingang 22. Abhängig von dem den Schaltzustand repräsentierenden Messsignal S, welches der Spannungsregeleinrichtung 14 von der Elektronikeinheit 13 zugeführt wird, stellt die Spannungsregeleinrichtung 14 die Klemmenspannung auf einen ersten oder zweiten Wert ein. Um ein eindeutiges Ausgangssignal zu erzeugen liegt der erste Wert beispielsweise zwischen 1 und 5 V und der zweite Wert zwischen 20 und 24 V, vorzugsweise bei 5 V und 20 V. Die Einstellung der Klemmenspannung erfolgt beispielsweise über eine Regelung des Innenwiderstands der Spannungsregeleinrichtung 14. Vorzugsweise sind die beiden Widerstandswerte derart gewählt, dass die Leistungsentnahme für beide Werte der Klemmenspannung gleich ist. Der Elektronikeinheit 13 wird somit unabhängig vom Schaltzustand eine konstante Leistung zur Verfügung gestellt.

### Bezugszeichenliste

- 1: Messgerät
- 11: Schwingfähige Einheit
- 12: Elektronikeinheit
- 13: Spannungsregeleinrichtung
- 14: Leistungsregeleinrichtung
- 2: Prozessleitsystem
- 21: Analoger Ausgang
- 22: Digitaler Eingang
- 3: Behälter
- 4: Medium
- S: Messsignal

## Patentansprüche

1. Vorrichtung (1) zur Bestimmung und/oder Überwachung mindestens eines Grenzwerts einer Prozessgröße eines Mediums (4) in einem Behälter (3), mit mindestens einer Sensoreinheit zur Aufnahme eines von der Prozessgröße abhängigen Messwertes und mit mindestens einer Elektronikeinheit (13) zur Erzeugung eines von der Prozessgröße abhängigen Messsignals (S)
**dadurch gekennzeichnet,**
**dass** die Vorrichtung (1) dazu ausgestaltet ist, Energie über einen Spannungsausgang (21) und einen digitalen Eingang (22) einer Registrier-Vorrichtung oder eines Prozessleitsystems (2) zu beziehen, dass die Vorrichtung eine Spannungsregeleinrichtung (14) aufweist, welche den Spannungsausgang (21) mit dem digitalen Eingang (22) verbindet, und
**dass** die Spannungsregeleinrichtung (14) dazu ausgestaltet ist, in Abhängigkeit des Messsignals (S) die Klemmenspannung der Vorrichtung (1) zu regeln.

2. Vorrichtung nach Anspruch 1,
**dadurch gekennzeichnet,**
**dass** es sich bei dem Messsignal (S) um ein Schaltsignal handelt, welches in Abhängigkeit der Prozessgröße einen von zwei möglichen Zuständen annimmt.

3. Vorrichtung nach Anspruch 1,
**dadurch gekennzeichnet,**
**dass** die Spannungsregeleinrichtung (14) die Elektronikeinheit (13) mit einer konstanten Leistung versorgt.

4. Vorrichtung nach einem der Ansprüche 1-3,
**dadurch gekennzeichnet,**
**dass** die Spannungsregeleinrichtung (14) einen veränderbaren Innenwiderstand besitzt.

5. Vorrichtung nach einem der vorangehenden Ansprüche,
**dadurch gekennzeichnet,**
**dass** es sich bei der nachgeordneten Steuer- und/oder Registrier-Vorrichtung (2) um eine speicherprogrammierbare Steuerung oder um einen digitalen Bildschirmschreiber handelt.

6. Vorrichtung nach einem der vorangehenden Ansprüche,
**dadurch gekennzeichnet,**
**dass** es sich bei der Prozessgröße um einen Grenzstand einer Flüssigkeit oder eines Schüttguts in dem Behälter oder um einen Grenzwert für die Dichte oder die Viskosität des Mediums (4) handelt.

7. Vorrichtung nach einem der vorangehenden Ansprüche,
**dadurch gekennzeichnet,**
**dass** die Sensoreinheit als mechanisch schwingfähige Einheit (11) mit einer Antriebs-/Empfangseinheit (12), welche die schwingfähige Einheit (11) zu Schwingungen anregt und die Schwingungen empfängt und in ein elektrisches Empfangssignal umwandelt, ausgestaltet ist,
und **dass** die Elektronikeinheit (13) dazu ausgestaltet ist, die Schwingungsanregung zur regeln und das Empfangssignal in Bezug auf die Prozessgröße auszuwerten.

8. Vorrichtung nach einem der vorangehenden Ansprüche,
**dadurch gekennzeichnet,**
**dass** die Sensoreinheit als konduktive oder kapazitive Sonde mit mindestens einer Elektrode ausgestaltet ist
und **dass** die Elektronikeinheit (13) dazu ausgestaltet ist, die Elektrode mit einem elektrischen Sendesignal zu beaufschlagen, ein elektrisches Empfangssignal zu empfangen und das Empfangssignal in Bezug auf die Prozessgröße auszuwerten.

## Claims

1. Apparatus (1) designed to determine and/or to monitor at least a limit value of a process variable of a medium (4) in a vessel (3), with at least a sensor unit designed to record a measured value that depends on the process variable and with at least one electronics unit (13) designed to generate a measuring signal (S) that depends on the process variable,
**characterized in that**
the apparatus (1) is designed to draw energy via a voltage output (21) and a digital input (22) of a recording apparatus or of a process control system (2),
**in that** the apparatus comprises a voltage control apparatus (14), which connects the voltage output (21) to the digital input (22), and
**in that** the voltage control apparatus (14) is designed to regulate the terminal voltage of the apparatus (1) depending on the measuring signal (S).

2. Apparatus as claimed in Claim 1,
**characterized in that**
the measuring signal (S) is a switching signal which adopts one of two possible states depending on the process variable.

3. Apparatus as claimed in Claim 1,
**characterized in that**
the voltage control apparatus (14) supplies a constant power to the electronics unit (13).

4. Apparatus as claimed in one of the Claims 1 to 3,
**characterized in that**
the voltage control apparatus (14) has a variable inner resistance.

5. Apparatus as claimed in one of the previous claims,
**characterized in that**
the downstream control and/or recording apparatus (2) is a programmable logic controller or a digital graphic data manager.

6. Apparatus as claimed in one of the previous claims,
**characterized in that**
the process variable is a limit value of a liquid or a bulk solid in the vessel or a limit value for the density or the viscosity of the medium (4).

7. Apparatus as claimed in one of the previous claims,
**characterized in that**
the sensor unit is designed as a unit capable of vibrating mechanically (11) with a drive/reception unit (12), which causes the unit capable of vibrating mechanically (11) to vibrate, receives the vibrations and converts them to an electrical reception signal,
and **in that** the electronics unit (13) is designed to regulate the vibration excitation and evaluate the reception signal in relation to the process variable.

8. Apparatus as claimed in one of the previous claims,
**characterized in that**
the sensor unit is designed as a conductive or capacitive probe with at least one electrode
and **in that** the electronics unit (13) is designed to apply an electrical transmission signal to the electrode, to receive an electrical reception signal and to evaluate the reception signal in relation to the process variable.

## Revendications

1. Dispositif (1) destiné à la détermination et/ou à la surveillance d'au moins un seuil d'une grandeur de process d'un produit (4) dans un réservoir (3), avec au moins une unité de capteur destinée à l'enregistrement d'une valeur mesurée dépendant de la grandeur de process et avec au moins une unité électronique (13) destinée à la génération d'un signal de mesure (S) dépendant de la grandeur de process,
**caractérisé**
**en ce que** le dispositif (1) est conçu de telle sorte à prélever l'énergie via une sortie tension (21) et une entrée numérique (22) d'un dispositif d'enregistrement ou d'un système numérique de contrôle commande (2),
**en ce que** le dispositif comprend un dispositif de régulation de tension (14), lequel dispositif relie la sortie tension (21) avec l'entrée numérique (22), et
**en ce que** le dispositif de régulation de tension (14) est conçu de telle sorte à réguler la tension aux bornes du dispositif (1) en fonction du signal de mesure (S).

2. Dispositif selon la revendication 1,
**caractérisé**
**en ce que**, concernant le signal de mesure (S), il s'agit d'un signal de commutation adoptant un état parmi deux états possibles, en fonction de la grandeur de process.

3. Dispositif selon la revendication 1,
**caractérisé**
**en ce que** le dispositif de régulation de tension (14) alimente l'unité électronique (13) avec une puissance constante.

4. Dispositif selon l'une des revendications 1 à 3,
**caractérisé**
**en ce que** le dispositif de régulation de tension (14) est doté d'une résistance interne variable.

5. Dispositif selon l'une des revendications précédentes,
**caractérisé**
**en ce que**, concernant le dispositif aval de commande et/ou d'enregistrement (2), il s'agit d'un automate programmable ou d'un enregistreur sans papier.

6. Dispositif selon l'une des revendications précédentes,
**caractérisé**
**en ce que**, concernant la grandeur de process, il s'agit d'un seuil de niveau d'un liquide ou d'un produit en vrac dans le réservoir ou d'un seuil pour la densité ou la viscosité du produit (4).

7. Dispositif selon l'une des revendications précédentes,
**caractérisé**
**en ce que** l'unité de capteur est conçue en tant qu'unité apte à vibrer mécaniquement (11) avec une unité d'entraînement / de réception (12), laquelle fait entrer en vibrations l'unité apte à vibrer (11), reçoit les vibrations et les convertit en un signal de réception électrique,
et **en ce que** l'unité électronique (13) est conçue de telle sorte à réguler le déclenchement des vibrations et à évaluer le signal reçu par rapport à la grandeur de process.

8. Dispositif selon l'une des revendications précédentes,
**caractérisé**
**en ce que** l'unité de capteur est conçue en tant que sonde conductive ou capacitive avec au moins une électrode
et **en ce que** l'unité électronique (13) est conçue de telle sorte à alimenter l'électrode avec un signal d'émission électrique, à recevoir un signal électrique et à évaluer le signal reçu par rapport à la grandeur de process.
